# EUROPÄISCHE PATENTSCHRIFT

(11) **EP 1 281 591 B1**
(45) Veröffentlichungstag und Bekanntmachung des Hinweises auf die Patenterteilung: **06.09.2006**
(21) Anmeldenummer: 02102008.6
(22) Anmeldetag: 08.07.2002
(51) Int. Cl.: B60T 8/00

(54) **Regelungsverfahren sowie Regler für den Automobilbereich**
Controller and control method for a motor vehicle
Régulateur et méthode de régulation pour véhicule automobile

(30) Priorität: 03.08.2001 DE 10138258
(43) Veröffentlichungstag der Anmeldung: 05.02.2003
(73) Patentinhaber: SIEMENS AKTIENGESELLSCHAFT, 80333 München (DE)
(72) Erfinder: Arnold, Armin, 90602 Pyrbaum (DE); Wiehoff, Hans-Jörg, 93049 Regensburg (DE)

(56) Entgegenhaltungen:
- DE-A- 4 324 205
- DE-A- 19 949 286
- US-A- 5 455 770

## Beschreibung

Die vorliegende Erfindung betrifft ein Verfahren nach dem Oberbegriff des Patentanspruches 1 sowie einen entsprechenden Regler für den Automobilbereich.

Ein derartiges Regelungsverfahren ist allgemein bekannt, wobei in der Regelungsstruktur mit einem über- und einem unterlagerten Regler eine feste Einstellung der Parameter des unterlagerten Reglers wegen der variierenden Anforderungen häufig nicht in allen Betriebssituationen zu befriedigenden Regelungsergebnissen führt. Ein vom überlagerten Regler vorgegebener Sollwertverlauf enthält nämlich lediglich dann alle für die Regelung erforderlichen Informationen, wenn ihm unmittelbar und sofort gefolgt werden kann. Dies ist in der Praxis jedoch bei nahezu keinem System der Fall, weil der Istwertverlauf in bestimmten Betriebssituationen von der Sollwertvorgabe abweicht. Die Art und Weise, wie diese Regelungsabweichung abgebaut werden soll, lässt weitere Freiheitsgrade offen, die gewöhnlich nicht vom überlagerten Regler bestimmt werden, sondern durch die Einstellung der Parameter des unterlagerten Reglers fest gewählt werden.

Aus DE 43 24 205 A1 ist eine Bremsanlage für Kraftfahrzeuge bekannt, die einen pneumatischen Bremskraftverstärker aufweist, dessen Steuerventil durch einen Elektromagneten betätigbar ist. Es ist ein zweiter elektronischer Regler in Form eines Verzögerungsreglers vorgesehen, der ein Verzögerungswunschsignal in ein Stellsignal umsetzt, das der Ansteuerung des den Dichtsitz des Steuerventils betätigenden Elektromagneten dient. Ein Fahrzeugregler gibt dazu entsprechend ein Verzögerungswunschsignal an den Verzögerungsregler. Aus der Differenz zwischen dem Verzögerungswunschsignal und dem Verzögerungs-Ist-Signal ermittelt der Verzögerungsregler eine Sollposition für das Steuerventil. Aus dem Vergleich zwischen Soll-Position und Ist-Position wird ein Regelwert ermittelt, der über einen Lageregler auf das Steuerventil übertragen wird.

Aus DE 199 49 286 A1 ist eine Vorrichtung und ein Verfahren zur Regelung wenigstens einer Fahrzeugbewegungsgröße bekannt. Die Vorrichtung weist einen ersten Regler auf, der aus Fahrzeugparametern eine Gierwinkelabweichung ermittelt und einem zweiten, unterlagerten Regler zuführt. Der zweite unterlagerte Regler ermittelt aus Fahrzeugparametern und der Gierwinkelabweichung einen Traktionsschlupf. Weiterhin ist eine Schlecht-Weg-Streckenerkennung vorgesehen, mit der eine Schlecht-Weg-Strecke erkannt wird. In Abhängigkeit von dem Vorliegen einer Schlecht-Weg-Strecke wird eine Beeinflussung der Reglermittel derart vorgenommen, dass die Empfindlichkeit der Reglermittel an die Fahrt des Fahrzeuges auf einer Schlecht-Weg-Strecke angepasst wird.

Aus US 5 455 770 ist ein dynamisches Fahrzeugsteuerungssystem bekannt, das eine Fahrzeugsteuereinheit aufweist, die zwei Regelkanäle steuert. Ein erster Regelkanal steuert die Gierwinkelgeschwindigkeit und ein zweiter Regelkanal eine Schiebewinkelgeschwindigkeit des Fahrzeuges. Die Fahrzeugsteuereinheit gibt für die zwei untergeordneten Regelkanäle die gewünschten Sollwerte und Grenzwerte vor. Weiterhin bestimmt die Fahrzeugsteuereinheit in Abhängigkeit von der Fahrsituation, welche der zwei Regelkanäle aktiv geschaltet ist.

Die Aufgabe der vorliegenden Erfindung besteht in einer Verbesserung des Regelungsverhaltens eines Systems mit über- und unterlagertem Regler.

Erfindungsgemäß ist dies mit einem Verfahren mit den Merkmalen des Patentanspruches 1 erreicht. Die Verbesserung des Regelungsverhaltens wird dabei dadurch erreicht, dass in der Reglerstruktur mit über- und unterlagertem Regler nicht nur - wie beim Stand der Technik üblich - der Sollwert weitergegeben wird, sondern auch weitere Informationen, die im Sollwert nicht enthalten sein können. Diese Zusatzinformationen enthalten Vorschriften für den unterlagerten Regler, wie eine Regelungsabweichung ohne Änderung der Reglerparameter korrigiert werden soll. Entsprechendes gilt für den erfindungsgemäßen Regler nach Patentanspruch 6. Zu der eigentlichen Sollwertvorgabe werden vom überlagerten Regler Zusatzinformationen versendet, die von dem unterlagerten Regler berücksichtigt werden. Diese Zusatzinformationen sollen dabei jedoch nicht die zu verwendenden Parametereinstellungen des unterlagerten Reglers selbst sein, wie z.B. die Größe des P-, I- und D-Anteils eines PID-Reglers, da ansonsten diese Änderungen am Stellglied bzw. am unterlagerten Regler auch Änderungen im überlagerten Regler und dessen versendeten Zahlenwerten erforderlich machen würden.

Geeignet können hierbei Informationen zu dem gewünschten qualitativen Verhalten sein, wie z.B. "kein Überschwingen" oder "schnelles Einschwingen" oder zu der qualitativen Bedeutung der Sollwertvorgabe, wie z.B. "kontinuierlicher Verlauf" oder "einmaliger Sollwertsprung". Diese erfindungsgemäßen Informationen weisen den Vorteil auf, dass zur Übertragung derartiger Klassifikationen schon wenige Bits Datenbreite genügen und die Informationen von allgemeiner, anschaulicher Natur sind. Der überlagerte Regler muss insbesondere nicht auf jede Änderung des Stellgliedes oder unterlagerten Reglers hin neu angepasst werden.

Allerdings kann es der Fall sein, dass der Informationsgehalt der Zusatzinformationen noch nicht ausreichend ist, um interessierende, physikalisch mögliche Eigenschaften des Stellgrößenverlaufes zu erzwingen. Weiterhin kann sich die konkrete Umsetzung der allgemeinen Anweisung im unterlagerten Regler relativ aufwendig gestalten. Weitere Zusatzinformationen können deshalb vorteilhafter Weise einzuhaltende Minimal- und Maximalwerte der Ableitungen, wie z.B. "Gradient der Stellgröße soll den Wert nicht überschreiten" sein.

Nachfolgend ist anhand schematischer Darstellungen ein Ausführungsbeispiel des erfindungsgemäßen Regelungsverfahrens bzw. Reglers beschrieben; es zeigen
Fig.1 vereinfacht einen PKW mit einem geregelten Bremssystem; sowie
Fig. 2 den Zeitverlauf F(t) der Soll- und Istwerte der Bremskräfte bei Verwendung des erfindungsgemäßen Regelungsverfahrens.

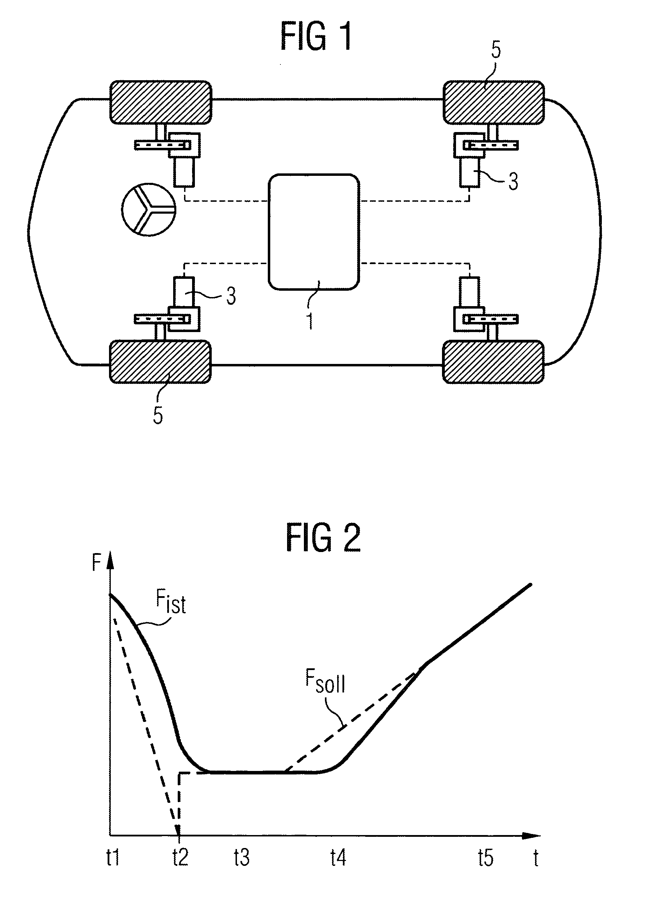

In Fig. 1 ist eine elektromechanische Bremsanlage (EMB) eines Pkws gezeigt. Dazu ist ein ABS-Regler 1 als überlagerter Regler vorgesehen, der elektromotorische Antriebe mit zugehörigen Reglern als unterlagerten PID-Reglern 3 jeweils Sollwerte für die erforderlichen Bremszuspannkräfte vorgibt. Der elektromotorische Antrieb realisiert dann die entsprechenden Ist-Zuspannkräfte und bremst das jeweilige Rad 5 ab. Als Zusatzinformationen wird zum einen ein Maximal- bzw. ein Minimalgradient für den Kraftverlauf vorgegeben und zum anderen eine Unterscheidung zwischen kontinuierlicher und Sprungvorgabe übergeben, wie nachfolgend beschrieben ist.

Gemäß Fig. 2 soll ein Rad 5 während eines Bremsvorganges zu großen Schlupf bzw. eine zu groß eingestellte Bremskraft aufweisen. Der vom ABS-Regler 1 berechnete Wert der Soll-Zuspannkraft Fsoll ist also geringer als die tatsächliche Ist-Zuspannkraft Fist. Um die Stelldynamik des Regelungssystems sicher vollständig auszuschöpfen, senkt der überlagerte Regler 1 den Wert der Sollkraft Fsoll etwas schneller als die Istkraft Fist aufgrund der Eigenschaften der EMB folgen kann. Der elektromotorische Stellantrieb dreht sich jedoch so schnell wie physikalisch möglich in Richtung Zuspannkraft-Abbau (Zeitbereich t1).

Der ABS-Regler 1 errechnet zum Zeitpunkt t2, dass der Wert der Sollkraft Fsoll unnötig niedrig liegt und hebt deshalb den Wert der Sollkraft um einen gewissen Betrag sprungartig an, allerdings noch unterhalb des Wertes der derzeitigen Istkraft Fist. Gewünscht wird zu diesem Zeitpunkt t2 nun jedoch keine volle Gegenbestromung des Aktuators des elektromotorischen Stellantriebes der EMB. Es ist vielmehr weiterhin unverändert ein Druckabbau bzw. eine Verringerung der Zuspannkraft Fist erforderlich, um die Regelungsdifferenz weiter verringern zu können. Der vom ABS-Regler 1 vorgegebene Sprung im Sollkraftverlauf Fsoll zum Zeitpunkt t2 würde jedoch, wenn keine weiteren Maßnahmen ergriffen werden, durch z.B. den D-Anteil des unterlagerten Kraftreglers 3 eine starke Verlangsamung des erforderlichen Kraftabbaus zur Folge haben. Eventuell würde sogar eine Drehrichtungsumkehr mit Bremskrafterhöhung statt der erforderlichen Bremskraftverringerung erfolgen, was zu blockierenden Rädern 5 führen könnte. Ursache dafür wäre, dass der unterlagerte Regler 3 ohne weitere Information nicht erkennen kann, dass es sich um einen einmaligen Sollwert- bzw. Kraftsprung im Sinne einer erforderlichen Korrektor des Sollwertes Fsoll handelt und nicht um eine neue nachzufahrende Änderung der Sollkraft. Zum Zeitpunkt t2 wird daher vom ABS-Regler 1 zusätzlich zum Sollwertsprung die Information "Kraftsprung, keine kontinuierliche Vorgabe" an den EBM-Regler 3 übergeben. Diese Zusatzinformation wird vom unterlagerten Regler 3 genutzt, z.B. indem in seinem D-Anteil lediglich der durch die Istkraftänderung, nicht aber der durch die Sollkraftänderung verursachte Anteil berücksichtigt wird (Fig. 2: Zeitpunkt t2).

Nach dem während der Zeitspanne t3 erfolgten Abbau der Ist-Zuspannkraft Fist und der Reduzierung der Regelungsdifferenz auf Null wird die Soll-Zuspannkraft Fsoll durch den ABS-Regler 1 im Zeitbereich t4 wieder erhöht. Dies erfolgt kontinuierlich, um sich vorsichtig wieder an die Haftgrenze des Reifens 5 herantasten zu können, und um zu große Geschwindigkeiten der Antriebsmechanik der EMB zu vermeiden. Das ist vorteilhaft, damit die Drehrichtung des EBM-Stellantriebs beim Auftreten von unerwünscht großem Radschlupf infolge zu großer Zuspannkräfte Fist möglichst schnell wieder umgekehrt werden kann. Da der Ist-Zuspannkraftgradient den Sollwertgradienten während Einschwingvorgängen deutlich überschreiten kann, wird von dem überlagerten Regler 1 als Zusatzinformation ein Maximalgradient für den Istwertverlauf Fist für die Zeitbereiche t4 und t5 vorgegeben. Dieser Maximalgradient für den Ist-Bremskraftverlauf ist dabei etwas größer gewählt als der Wert für die Sollwertvorgabe, um ein Annähern der Istkraft an die Sollkraft zu ermöglichen. Dadurch können unerwünscht hohe Kraftaufbaugradienten und damit zu hohe Antriebsdrehzahlen in der EBM vermieden werden. Während dem Zeitbereich t4 nähert sich der Ist- dem Solldruck bzw. die Ist-Bremskraft Fist der Soll-Bremskraft Fsoll daher deutlich langsamer an, als es dem Stellglied eigentlich möglich wäre.

Die Umsetzung einer Drehzahlbeschränkung im unterlagerten Regler 3 kann relativ leicht erfolgen, wenn der Regler des EMB-Aktuators seinerseits in zwei Regler mit einem überlagerten Kraft- und einem unterlagerten Drehzahlregler aufgeteilt ist. Der maximale Kraftgradient braucht dann nur in die entsprechende maximale Antriebsdrehzahl umgerechnet werden (nicht gezeigt).

Im Zeitbereich t5 ist die eventuell weiterhin vorgegebene Gradientenbegrenzung für den Verlauf der Ist-Bremskraft Fist unwirksam, da die Istkraft Fist jetzt der Sollkraft Fsoll problemlos mit einer Regeldifferenz von Null folgen kann. Der Anstieg der Sollkraft Fsoll erfolgt dabei langsamer als der zulässige Maximalgradient der Istkraft Fist.

## Patentansprüche

1. Verfahren zur Regelung eines Istwertes auf einen Sollwert bei einem Regelungssystem für den Automobilbereich mit einem unterlagerten Regler (3) und einem überlagerten Regler (1), wobei vom überlagerten Regler (1) ein jeweiliger Sollwert dem unterlagerten Regler vorgegeben wird wobei zusätzlich zum Sollwert dem unterlagerten Regler (3) vom überlagerten Regler (1) Zusatzinformationen übergeben werden, **dadurch gekennzeichnet dass** die Zusatzinformationen Vorschriften für den unterlagerten Regler (3) enthalten, wie eine vorliegende Regelabweichung ohne Änderung von Reglerparametern korrigiert werden soll, und wobei die Zusatzinformationen keine Reglerparameter des unterlagerten Reglers (3) umfassen.

2. Verfahren nach Anspruch 1, **dadurch gekennzeichnet, dass** der unterlagerte Regler (3) in einen überlagerten und einen unterlagerten Regler aufgeteilt ist.

3. Verfahren nach Anspruch 1 oder 2, **dadurch gekennzeichnet, dass** als Zusatzinformation zulässige Maximal- oder Minimalgradienten des Istwertverlaufes vorgesehen sind.

4. Verfahren nach Anspruch 1, 2 oder 3, **dadurch gekennzeichnet, dass** als Zusatzinformation qualitative Angaben zur Bedeutung einer Sollwertänderung vorgesehen sind.

5. Verfahren nach einem der vorhergehenden Ansprüche, **dadurch gekennzeichnet, dass** als Zusatzinformation qualitative Angaben zum Verhalten des unterlagerten Reglers vorgesehen sind.

6. Regler für den Automobilbereich zur Regelung eines Istwertes auf einen Sollwert mit einem unterlagerten Regler (3) und einem überlagerten Regler (1), der einen jeweiligen Sollwert dem unterlagerten Regler vorgibt, wobei der überlagerte Regler (1) zusätzlich zum Sollwert (3) an den unterlagerten Regler (3) Zusatzinformationen gibt, **dadurch gekennzeichnet, dass** die Zusatzinformationen Vorschriften für den unterlagerten Regler (3) enthalten, wie eine vorliegende Regelabweichung ohne Änderung von Reglerparametern korrigiert werden soll, und wobei die Zusatzinformationen keine Reglerparameter des unterlagerten Reglers (3) umfassen.

## Claims

1. Method for controlling an actual value to match a setpoint value in a closed loop control system for the automotive industry comprising a secondary controller (3) and a primary controller (1), wherein the primary controller (1) sets a particular setpoint value for the secondary controller, supplementary information being transferred from the primary controller (1) to the secondary controller (3) in addition to the setpoint value,
**characterised in that** the supplementary information contains instructions for the secondary controller (3) as to how any deviation present is to be corrected without changing the controller parameters, and that the supplementary information includes no controller parameters of the secondary controller (3).

2. Method according to Claim 1, **characterised in that** the secondary controller (3) is subdivided into a primary and a secondary controller.

3. Method according to Claim 1 or 2, **characterised in that** permissible maximum or minimum gradients of the actual value response are provided as supplementary information.

4. Method according to Claim 1, 2, or 3, **characterised in that** qualitative information regarding the significance of a setpoint value change is provided as supplementary information.

5. Method according to one of the preceding Claims, **characterised in that** qualitative information concerning the behaviour of the secondary regulator is provided as supplementary information.

6. Controller for the automotive industry for controlling an actual value to match a setpoint value using a secondary controller (3) and a primary controller (1) which sets a particular setpoint value for the secondary controller, the primary controller (1) giving supplementary information to the secondary controller (3) in addition to the setpoint value, **characterised in that** the supplementary information contains instructions for the secondary controller (3) as to how any deviation present is to be corrected without changing controller parameters, and that the supplementary information includes no controller parameters of the secondary controller (3).

## Revendications

1. Procédé de réglage d'une valeur effective en se référant à une valeur de consigne dans un système de régulation destiné au domaine de l'automobile présentant un régulateur inférieur (3) et un régulateur supérieur (1), le régulateur supérieur (1) prescrivant une valeur attendue au régulateur inférieur (3) dans lequel en plus de la valeur de consigne, le régulateur supérieur (1) transmet au régulateur inférieur (3) des informations supplémentaires, les informations supplémentaires contenant des directives destinées au régulateur inférieur (3), permettant de corriger une déviation de régulation sans modifier les paramètres du régulateur, les informations supplémentaires n'englobant aucun paramètre de régulation du régulateur inférieur (3).

2. Procédé selon la revendication 1, **caractérisé en ce que** le régulateur inférieur (3) est divisé en un régulateur supérieur et un régulateur inférieur.

3. Procédé selon la revendication 1 ou 2, **caractérisé en ce que** des gradients maximum et minimum admissibles de l'évolution de la valeur effective sont prévus comme information supplémentaire.

4. Procédé selon la revendication 1, 2 ou 3, **caractérisé en ce que** des indications qualitatives sur la signification d'une modification d'une valeur de consigne sont prévues comme information supplémentaire.

5. Procédé selon l'une quelconque des revendications précédentes, **caractérisé en ce que** des indications qualitatives concernant le comportement du régulateur inférieur sont prévues comme information supplémentaire.

6. Régulateur destiné au secteur automobile pour réguler une valeur effective en se référant à une valeur attendue présentant un régulateur inférieur (3) et un régulateur supérieur (1) qui prescrit une valeur de consigne au régulateur inférieur, le régulateur supérieur (1) transmettant des informations supplémentaires en plus de la valeur de consigne au régulateur inférieur (3), les informations supplémentaires contenant des directives à destination du régulateur inférieur (3), permettant de corriger un écart de réglage sans modifier les paramètres du régulateur, les informations supplémentaires n'englobant aucun paramètre de régulation du régulateur inférieur (3).
